(19) Europäisches Patentamt / European Patent Office / Office européen des brevets

(11) **EP 4 173 699 A1**

(12) **EUROPEAN PATENT APPLICATION**
published in accordance with Art. 153(4) EPC

(43) Date of publication:
**03.05.2023 Bulletin 2023/18**

(21) Application number: **21834586.6**

(22) Date of filing: **29.06.2021**

(51) International Patent Classification (IPC):
**B01D 63/02** (2006.01)     **B01D 69/12** (2006.01)
**B01D 71/54** (2006.01)     **B01D 71/56** (2006.01)
**B01D 71/72** (2006.01)

(52) Cooperative Patent Classification (CPC):
**B01D 63/02; B01D 69/12; B01D 71/54;
B01D 71/56; B01D 71/72;** Y02A 20/131

(86) International application number:
**PCT/JP2021/024610**

(87) International publication number:
**WO 2022/004738 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2020   JP 2020111895
30.07.2020   JP 2020129100**

(71) Applicant: **Asahi Kasei Kabushiki Kaisha
Tokyo 1000006 (JP)**

(72) Inventors:
• **TAKADA, Ryoichi**
  **Tokyo 100-0006 (JP)**
• **KUBOTA, Noboru**
  **Tokyo 100-0006 (JP)**
• **SUZUMURA, Keitaro**
  **Tokyo 100-0006 (JP)**
• **OSAKI, Takahiro**
  **Tokyo 100-0006 (JP)**

(74) Representative: **D Young & Co LLP
120 Holborn
London EC1N 2DY (GB)**

(54) **COMPOSITE HOLLOW FIBER MEMBRANE MODULE AND METHOD FOR PRODUCING SAME**

(57)     This forward-osmosis composite hollow fiber membrane module has hollow fiber bundles, wherein: the hollow fibers are each such that a separation active layer of a high-molecular polymer thin film is provided on the inner surface of a microporous hollow fiber support film formed from a high-molecular polymer including polyketone; the film surface area of the hollow fiber bundles is 100 cm$^2$ or greater; and the coefficient of variation of the average thickness of the separation active layer in the radial and thickness directions of the hollow fiber bundle is 0-60%, said coefficient being calculated through a method for measuring the mass of the separation active layer portion in a scanning electron microscope image in which a thickness-direction cross section of the separation active layer is imaged.

FIG. 1

**Description**

FIELD

The present invention relates to a composite hollow fiber membrane module having selective permeability, to be used for separation of solutes and other substances from a liquid mixture containing an organic solvent, as well as a method for producing it. More specifically, the invention relates to a composite hollow fiber membrane module produced by forming a separation active layer with selective permeability on the inner surface of a support membrane by interfacial polymerization, and to a method for producing the same.

BACKGROUND

Forward osmosis for organic solvent-containing liquid mixtures is a known technique for achieving drastic energy savings in separation processes (NPLs 1 and 2).

The technique involves contacting an organic solvent-containing liquid mixture that is to be separated (feed solution) with a solution having higher osmotic pressure (driving solution) through a semi-permeable membrane to remove the organic solvent, water and non-target solute substances from the liquid mixture, thereby obtaining a solution with higher concentration of the target substance.

Migration of substances through the semi-permeable membrane is driven by the difference in osmotic pressure between the feed solution and the driving solution. One feature of the technique is that it is not necessary to artificially create a mechanical pressure difference. In actual practice, however, it is technologically difficult to maintain prolonged control in a completely pressure difference-free state, and consequently the state of two solutions will usually revert to a state with one at higher pressure than the other. A semi-permeable membrane to be used in such a technique must therefore be durable enough to not undergo loss of function even when pressure has been applied to either the feed solution or the driving solution.

In the aforementioned technique it is common to employ a composite membrane having a thin separation active layer formed on a microporous support membrane. The most important practical issue with such a composite membrane is its durability against pressure applied from the support membrane side. As mentioned above, since a separation active layer is formed on the support membrane as mentioned above, a composite membrane will often suffer detachment of the separation active layer when pressure is applied from the support membrane side, thus losing some of its function.

As a measure to help prevent this problem, it is considered effective to firmly bond together the support membrane and separation active layer. One composite membrane has been proposed that has the support membrane and separation active layer firmly bonded by chemical bonds (PTL 2). However, the durability against pressure from the support membrane side cannot be considered sufficient with such bonding alone.

If the separation active layer is excessively thick, the durability against pressure from the support membrane side may be sufficient but the permeability may be significantly reduced.

It is commonly known that a separation active layer having fine irregularities on the surface has increased surface area and can therefore provide greater permeability.

[CITATION LIST]

[PATENT LITERATURE]

    [PTL 1] Japanese Unexamined Patent Publication No. 2017-213559
    [PTL 2] International Patent Publication No. WO2016/024573
    [PTL 3] Japanese Unexamined Patent Publication No. 2017-144390
    [PTL 4] International Patent Publication No. WO2016/027869

[NON PATENT LITERATURE]

    [NPL 1] Nat. Mater. 16, 276-279(2017)
    [NPL 2] NATURE COMMUNICATIONS (2018)91426

SUMMARY

[TECHNICAL PROBLEM]

It is an object of the present invention to provide a forward osmosis composite hollow fiber membrane module that exhibits both high water permeation volume and adequate practical durability against support membrane side pressure (back pressure durability) for practical use in a forward osmosis technique for organic solvent-containing liquid mixtures.

[SOLUTION TO PROBLEM]

The present inventors focused on the fact that when pressure is applied from the support membrane side of a composite membrane, the membrane undergoes fracture starting from the thinnest and most fragile sections of the separation active layer.

The inventors conducted much further research from this standpoint, to complete the invention.

The present invention achieves the object described above by the following aspects.

<Aspect 1>

A forward osmosis composite hollow fiber membrane module having a hollow fiber bundle composed of a plurality of hollow fibers, wherein:

the hollow fibers are hollow fibers having a separation active layer made of a polymer thin film formed on the inner surface of a microporous hollow fiber support membrane comprising a polyketone-containing polymer thin-film, and have a hollow fiber bundle membrane area of 100 cm$^2$ or greater, and

the coefficient of variation for the mean thickness of the separation active layer is 0 to 60% in the radial direction and lengthwise direction of the hollow fiber bundle, as calculated by measuring the mass of the separation active layer section in a scanning electron microscope image taken of a cross section of the separation active layer in the thickness direction.

<Aspect 2>

The module according to aspect 1, wherein the ratio L2/L1 between the length L2 of the separation active layer surface and the length L1 of the interface between the separation active layer and the hollow fiber support membrane is 1.1 or greater and 5.0 or lower, in a scanning electron microscope image taken of a cross section of the separation active layer in the thickness direction.

<Aspect 3>

The module according to aspect 2, wherein the ratio L2/L1 is 1.2 or greater and 3.0 or lower.

<Aspect 4>

The module according to any one of aspects 1 to 3, wherein the coefficient of variation is 0 to 50%.

<Aspect 5>

The module according to aspect 4, wherein the coefficient of variation is 0% to 30%.

<Aspect 6>

The module according to any one of aspects 1 to 5, wherein the macromolecular polymer is the polycondensation product of:

a first monomer comprising at least one selected from the group consisting of polyfunctional amines, and a second monomer comprising at least one selected from the group consisting of polyfunctional acid halides and polyfunctional isocyanates.

<Aspect 7>

The module according to aspect 6, wherein the macromolecular polymer is at least one selected from among polyamides and polyureas.

<Aspect 8>

A method for producing a module according to aspect 6, which comprises:

a first solution liquid film-forming step in which a liquid film of a first solution comprising either a first monomer or a second monomer is formed on the inner surface of the microporous hollow fiber support membrane,
a pressure difference setting step in which a pressure difference is created on the inside and the outside of the microporous hollow fiber support membrane so that (inside pressure) > (outside pressure), and
a second solution contact step in which a second solution comprising the other of the first monomer or second monomer is contacted with the liquid film of the first solution.

<Aspect 9>

The method according to mode 8, wherein the time after the pressure difference setting step is carried out until the second solution contact step is carried out is within 10 minutes.

<Aspect 10>

The method according to aspect 8 or 9, wherein the pressure difference is created by pressure reduction on the outside of the hollow fiber support membrane.

<Aspect 11>

The method according to aspect 8 or 9, wherein the pressure difference is created by pressurization on the inside of the hollow fiber support membrane.

<Aspect 12>

The method according to aspect 8 or 9, wherein the pressure difference is created by pressurization to different pressures on the outside and inside of the hollow fiber support membrane.

<Aspect 13>

The method according to any one of aspects 8 to 12, wherein the pressure difference is 1 to 100 kPa.

[ADVANTAGEOUS EFFECTS OF INVENTION]

The composite hollow fiber membrane module of the invention has markedly improved durability against pressure from the support membrane side, as well as sufficiently high permeability.
The composite hollow fiber membrane module of the invention can therefore be suitably applied for forward osmosis technologies designed for organic solvent-containing liquid mixtures.
Because of the high robustness of the system, the composite hollow fiber membrane module of the invention can be suitably applied not only for forward osmosis techniques but also for filtration techniques that rely on simple application of pressure to the feed solution side (such as reverse osmosis or nanofiltration techniques).
The composite hollow fiber membrane module of the invention can be used with advantages in such a process for concentration of pharmaceuticals and foods, and for volume reduction of waste water, for example.

BRIEF DESCRIPTION OF DRAWINGS

Fig. 1 is a cross-sectional view showing the structure of the composite hollow fiber membrane module of the invention.
Fig. 2 is a schematic diagram showing the configuration of an apparatus used to form a separation active layer in a microporous hollow fiber support membrane module by the method of the invention.

Fig. 3 is a scanning electron microscope image of a hollow fiber cross section of an example of a composite hollow fiber membrane module obtained by interfacial polymerization according to the method of the invention.

Fig. 4 is the scanning electron microscope image of Fig. 3 that has been binarized by the method of the invention.

Fig. 5(A) is a schematic diagram illustrating a method of calculating the cross-sectional obstruction rate for the binarized image of Fig. 4. Fig. 5(B) is a graph obtained by plotting the cross-sectional obstruction rate obtained in Fig. 5(A) in the depthwise direction of the separation active layer.

Fig. 6 is a diagram highlighting the interface between the separation active layer and support membrane for the binarized image of Fig. 4.

Fig. 7 is a schematic diagram illustrating the method of calculating the ratio L2/L1 by the method of the invention, for the binarized image of Fig. 4.

Fig. 8 is a schematic diagram illustrating a standard for establishing a scanning electron micrograph field for evaluation of L2/L1.

## DESCRIPTION OF EMBODIMENTS

Embodiments of the invention will now be explained in detail. The following embodiments are merely examples of the invention and are not intended to be limitative in any way.

<Forward osmosis composite hollow fiber membrane module>

The forward osmosis composite hollow fiber membrane module of the invention has a hollow fiber bundle composed of a plurality of hollow fibers, wherein:

the hollow fibers have a separation active layer made of a polymer thin film formed on the inner surface of a microporous hollow fiber support membrane comprising a polyketone-containing polymer thin-film, and have a hollow fiber bundle membrane area of 100 cm$^2$ or greater, and

the coefficient of variation for the mean thickness of the separation active layer is 0 to 60% in the radial direction and lengthwise direction of the hollow fiber bundle, as calculated by measuring the mass of the separation active layer section in a scanning electron microscope image taken of a cross section of the separation active layer in the thickness direction.

The invention uses a polyketone microporous support membrane with excellent organic solvent resistance as the support membrane, while using as the separation active layer a chemical substance capable of chemically reacting with the polyketone. Since the separation active layer and support membrane in the forward osmosis composite hollow fiber membrane module of the invention are thus firmly bonded by chemical bonding, high resistance is exhibited against pressure from the support membrane side.

The membrane thickness of the separation active layer in the forward osmosis composite hollow fiber membrane module of the invention is also uniform with fine irregularities on the surface, and the membrane therefore exhibits sufficiently high permeability.

The forward osmosis composite hollow fiber membrane module of the invention exhibits both sufficiently high permeability and a markedly high level of durability against pressure from the support membrane side.

<Microporous hollow fiber support membrane>

Firstly, the composite microporous hollow fiber support membrane in the forward osmosis composite hollow fiber membrane of the invention is a polyketone support membrane composed of a polyketone-containing polymer thin-film.

The polyketone of the support membrane is made of a copolymer of carbon monoxide and an olefin.

If the support membrane of the forward osmosis membrane is composed of a polyketone-containing polymer thin-film, the benefits of the following advantages can be provided.

Firstly, it is possible to form a support membrane with a high porosity while ensuring strength.

Secondly, polyketones are highly moldable. Since it is therefore possible to easily form a support membrane having a desired form such as a flat or hollow fiber form, it can be easily applied for any desired membrane module having a shape known in the prior art.

Thirdly, since the ketone groups of the polyketone can chemically react with the polyfunctional amine used to form the separation active layer, it is possible to obtain a composite membrane with firm bonding between the support membrane and separation active layer.

The polyketone support membrane preferably includes a polyketone as a copolymer of carbon monoxide and one or more olefins, in an amount of 10 mass% or greater and 100 mass% or lower. A greater polyketone content is preferred in the polyketone support membrane from the viewpoint of adhesion between the support membrane and separation active layer and formation of a support membrane which has a high porosity while maintaining strength. For example, the polyketone content of the polyketone support membrane is preferably 70 mass% or greater, more preferably 80 mass% or greater, even more preferably 90 mass% or greater and most preferably 100 mass%. The polyketone content of the polyketone support membrane can be confirmed by a method of dissolving out the polyketone with a solvent that dissolves only polyketones among the components of the support membrane, or a method of dissolving out the components other than the polyketone with a solvent that dissolves components other than polyketones.

Any suitable compound may be selected as the olefin to be copolymerized with carbon monoxide for synthesis of the polyketone. Examples of olefins include linear olefins such as ethylene, propylene, butene, hexene, octene and decene;

alkenyl aromatic compounds such as styrene and $\alpha$-methylstyrene;
cyclic olefins such as cyclopentene, norbornane, 5-methylnorbornane, tetracyclododecene, tricyclodecene, pentacyclopentadecene and pentacyclohexadecene;
alkene halides such as vinyl chloride and vinyl fluoride;
acrylic acid esters such as ethyl acrylate and methyl methacrylate; and
vinyl acetate. From the viewpoint of ensuring strength for the polyketone support membrane, the number of types of olefins to be copolymerized is preferably 1 to 3, more preferably 1 to 2 and even more preferably 1.

The polyketone is preferably one having a repeating unit represented by the following formula (1).

$$-R-C(=O)- \qquad (1)$$

{In formula (1), R represents an optionally substituted divalent hydrocarbon group of 2 to 20 carbon atoms.}

The hydrocarbon group of R is preferably a divalent aliphatic group of 2 to 20 carbon atoms such as 1,2-ethylene, 1,2-propylene, 1,2-butylene, 2-methyl-1,2-butylene, 1,2-hexene, 3-methyl-1,2-pentene, 4-methyl-1,2-pentene or 2-ethyl-1,2-butylene.

Examples of substituents for R include halogens, hydroxyl groups, alkoxyl groups, primary amino groups, secondary amino groups, tertiary amino groups, quaternary ammonium groups, and sulfonic acid, sulfonic acid ester, carboxylic acid, carboxylic acid ester, phosphoric acid, phosphoric acid ester, thiol, sulfide, alkoxysilyl and silanol groups, any one or more of which may be selected for use.

In formula (1), the repeating unit of the polyketone (i.e. the ketone repeating unit) may consist of a single type or a combination of two or more types.

The number of carbon atoms of the hydrocarbon group R in formula (1) is more preferably 2 to 8, even more preferably 2 to 3 and most preferably 2. The repeating unit of the polyketone most preferably includes a high proportion of repeating units of 1-oxotrimethylene represented by the following formula (2).

$$-CH_2-CH_2-C(=O)- \qquad (2)$$

From the viewpoint of ensuring strength for the polyketone support membrane, the proportion of 1-oxotrimethylene repeating units among the repeating units of the polyketone is preferably 70 mol% or greater, more preferably 90 mol% or greater and even more preferably 95 mol% or greater. The proportion of 1-oxotrimethylene repeating units may even be 100 mol%. Here, "100 mol%" means that no repeating units are observed other than 1-oxotrimethylene, except for polymer end groups, in a known analysis method such as elemental analysis, NMR (nuclear magnetic resonance) or gas chromatography. The structures of repeating units of the polyketone and the amount of each structure are typically confirmed by NMR.

The support membrane composed of the polyketone-containing polymer thin-film has a porous structure, allowing solutes, organic solvents and water to pass through the support membrane through interior penetrating voids. In order to effectively minimize interior concentrated polarization of solutes in the support membrane, it is preferred for pores with large pore sizes to be formed in the support membrane.

From this viewpoint, the polyketone support membrane preferably has pores formed with a maximum pore size of 50 nm or greater. The maximum pore size is measured by the bubble point method (according to ASTM F316-86 or JIS K3832). When a polyketone porous membrane having pores with a maximum pore size of 50 nm or greater as measured by the bubble point method is used as the support membrane for the forward osmosis membrane, it is possible to reduce the interior concentrated polarization of solutes in the support membrane, and thus increase the performance of the forward osmosis membrane. Since the interior concentrated polarization of solutes decreases as the maximum pore size increases, the maximum pore size of the polyketone support membrane is more preferably 80 nm or greater and even more preferably 130 nm or greater. On the other hand, the separation active layer becomes difficult to support if the maximum pore size is too large, and this can potentially lead to poor pressure resistance. From this viewpoint, the maximum pore size of the polyketone support membrane is preferably 2 $\mu$m or smaller, more preferably 1.5 $\mu$m or smaller, even more preferably 1 $\mu$m or smaller and most preferably 0.6 $\mu$m or smaller.

There is no particular restriction on the porosity in the polyketone support membrane. However, diffusion of solutes in the support membrane tends to occur with a higher porosity, and the interior concentrated polarization of solutes in the support membrane is reduced, allowing the water permeation volume of the forward osmosis membrane to be increased. An excessively high porosity, on the other hand, will impair the pressure resistance. From this viewpoint, the porosity of the polyketone support membrane is preferably 60% or greater and 95% or lower, more preferably 70% or greater and 95% or lower and even more preferably 80% or greater and 95% or lower.

The porosity of the polyketone support membrane (porous membrane) is calculated by the following mathematical formula (1).

$$\text{Porosity } (\%) = (1 - G/\rho/V) \times 100 \ (1)$$

{In formula (1), G is the mass (g) of the polyketone support membrane, $\rho$ is the mass-average density (g/cm$^3$) of all of the resins composing the polyketone support membrane, and V is the volume (cm$^3$) of the polyketone support membrane.}

The polyketone support membrane may also include another macromolecular polymer in addition to the polyketone.

When the polyketone support membrane is composed of a complex of a polyketone and a macromolecular polymer with a different density than the polyketone, the mass-average density $\rho$ in formula (1) is the sum of the products of the densities of each resin multiplied by their respective constituent mass ratios. For example, for a nonwoven fabric containing fibers having densities $\rho A$ and $\rho B$ at mass ratios GA and GB, respectively, when a polyketone of density $\rho p$ is combined in a mass ratio of Gp, the mass-average density $\rho$ is represented by the following mathematical formula (2).

$$\text{Mass-average density } \rho = (\rho_A \cdot G_A + \rho_B \cdot G_B + \rho_p \cdot G_p)/(G_A + G_B + G_p) \ (2)$$

The polyketone support membrane of the invention may be provided as hollow fibers for easier application in conventional membrane modules.

When the polyketone support membrane has a hollow fiber form (fiber form) it will be a membrane with voids running through the interior in the fiber axis directions. The outer diameter of the polyketone hollow fiber membrane will differ depending on the purpose of use, but a range of 50 $\mu$m to 5,000 $\mu$m is suitable. Considering the volume of the device per membrane unit area when the hollow fiber support membrane is made into a membrane module, a smaller (narrower) outer diameter of the polyketone hollow fiber membrane is preferred. On the other hand, a certain minimum outer diameter and inner diameter are desirable in consideration of the throughput capacity per unit time of the hollow fiber membrane module. Considering both of these factors, a more preferred range for the outer diameter of the polyketone hollow fiber membrane is 100 $\mu$m to 3,000 $\mu$m and even more preferably 200 $\mu$m to 1,500 $\mu$m.

From the viewpoint of reducing the interior concentrated polarization of solutes inside the support membrane, the thickness of the membrane portion of the polyketone hollow fiber membrane is preferably as thin as possible while ensuring strength. From the viewpoint of easier fabrication, on the other hand, the membrane portion of the polyketone hollow fiber must have at least a minimum degree of thickness. From this standpoint, the suitable thickness range for the membrane portion of the polyketone hollow fiber membrane is preferably 5 $\mu$m to 400 $\mu$m and more preferably 10 $\mu$m to 200 $\mu$m. The thickness of the membrane portion of the polyketone hollow fiber membrane can be measured by observing a cross section thereof by SEM. The cross section of the polyketone hollow fiber membrane may have any appropriate shape such as circular, elliptical or polygonal, but a circular or nearly circular shape is most preferred for symmetry.

The cross-sectional structure of the membrane portion of the polyketone hollow fiber membrane may be as a symmetrical membrane having a uniform pore structure from the outside to the inside, or it may be as an asymmetrical membrane having a different pore structure and different denseness on the outside and inside. When the polyketone hollow fiber membrane is an asymmetrical membrane, the thin-film layer exhibiting semi-permeable membrane performance is preferably provided on the denser side of the polyketone porous membrane.

The polyketone support membrane can be produced by a known method. For example, a polyketone may be dissolved in a solution containing a metal halide (for example, a zinc halide or alkali metal halide) to prepare a polyketone dope, and the dope passed through a suitable spinning hole such as a film die or double tube orifice and discharged into a coagulating bath for formation into a film, hollow fiber or other form, and further washed and dried to obtain a polyketone porous membrane. The porosity and pore size of the polyketone porous membrane can be changed by adjusting the polymer concentration in the dope and the temperature of the coagulating bath, for example, during the procedure.

As a different method for production of the polyketone support membrane, the polyketone may be dissolved in a good solvent (for example, resorcinol, hexafluoroisopropanol, m-cresol or o-chlorphenol), and the obtained solution cast onto a substrate and dipped in a non-solvent (for example, methanol, isopropanol, acetone or water), and washed and dried to obtain a polyketone porous membrane. In this case, the mixing ratio of the polyketone and good solvent and the type of non-solvent, for example, may be adjusted as appropriate to change the porosity and pore size of the polyketone porous membrane.

The polyketone can be obtained, for example, by polymerization of carbon monoxide and an olefin using a catalyst such as palladium or nickel. Production of the polyketone support membrane can be carried out with reference to Japanese Unexamined Patent Publication No. 2002-348401 or Japanese Unexamined Patent Publication HEI No. 2-4431, for example.

The polyketone support membrane module to be used for the embodiment can be obtained by inserting a plurality of the polyketone support membranes in a module housing to form a module. The module housing used may be a cylindrical housing with a diameter of 0.5 inches to 20 inches. The module can be formed by inserting a plurality of polyketone support membranes into a cylindrical housing and anchoring the polyketone support membranes in the module housing using an adhesive such as a urethane-based or epoxy-based adhesive.

The polyketone support membrane module therefore has a structure wherein a hollow fiber bundle composed of polyketone support membranes is inserted in a module and the fiber bundle ends are anchored with the adhesive. The adhesive is solidified so that it does not block the pores of the hollow fibers. This will help to ensure circulation through the hollow fibers. The module also preferably comprises a conduit that communicates with the inside (hollow sections) but does not communicate with the outside of the hollow fiber bundle, and a conduit that communicates with the outside but does not communicate with the inside of the hollow fiber bundle. With such a configuration it is possible to set the inside and outside of the hollow fiber bundle at different pressures, which is suitable for use to form the separation active layer for this embodiment as described below.

<Separation active layer and method for forming it>

For this embodiment, the separation active layer composed of a polyketone-containing polymer thin-film exhibits essentially separation performance.

Assuming that pinholes are not present, then a smaller thickness is preferred for the separation active layer. However, the thickness is preferably suitably large to maintain mechanical strength and chemical resistance. From this viewpoint, and in terms of film formation stability and permeability, the thickness of the separation active layer is preferably 0.1 $\mu$m or larger and 5 $\mu$m or smaller, and more preferably 0.2 $\mu$m or larger and 4 $\mu$m or smaller.

A preferred example for the polymer forming the separation active layer is the polycondensation product of a first monomer comprising at least one selected from the group consisting of polyfunctional amines, and a second monomer comprising at least one selected from the group consisting of polyfunctional acid halides and polyfunctional isocyanates. More specifically, it may be a polyamide obtained by interfacial polymerization reaction between a polyfunctional amine and a polyfunctional acid halide, or a polyurea obtained by interfacial polymerization reaction between a polyfunctional amine and a polyfunctional isocyanate. When such substances are used for the separation active layer, the separation performance is defined as the ability to separate the solvent (such as an organic solvent or purified water) from the solutes dissolved in the solvent.

The types of first monomer and second monomer, their combinations and the type of solvent used are not particularly restricted so long as the monomers immediately undergo polymerization reaction at their interface to form a polymer thin film. However, either or both the first monomer and second monomer preferably include a reactive compound with 3 or more reactive groups. This will lead to formation of a thin-film composed of a three-dimensional macromolecular polymer, which is more preferable from the viewpoint of obtaining high film strength.

The other functional amine may be a polyfunctional aromatic amine, polyfunctional aliphatic amine or a monomer with multiple reactive amino groups, or a prepolymer of the same.

A polyfunctional aromatic amine is an aromatic amino compound with two or more amino groups in the molecule, specific examples of which include m-phenylenediamine, p-phenylenediamine, 3,3'-diaminodiphenylmethane, 4,4'-diaminodiphenylamine, 4,4'-diaminodiphenyl ether, 3,4'-diaminodiphenyl ether, 3,3'-diaminodiphenylamine, 3,5-diaminobenzoic acid, 4,4'-diaminodiphenylsulfone, 3,3'-diaminodiphenylsulfone, 3,4'-diaminodiphenylsulfone, 1,3,5,-triaminobenzene and 1,5-diaminonaphthalene, which may be used alone or in combined mixtures. According to the invention it is particularly preferred to use one or more from among m-phenylenediamine and p-phenylenediamine.

A polyfunctional aliphatic amine is an aliphatic amino compound having two or more amino groups in the molecule, specific examples of which include:

primary amines with cyclohexane rings, such as 1,3-diaminocyclohexane, 1,4-diaminocyclohexane, 4,4'-bis(paraaminocyclohexyl)methane, 1,3-bis(aminomethyl)cyclohexane, 2,4-bis(aminomethyl)cyclohexane and 1,3,5,-triaminocyclohexane;

secondary amines with piperazine rings, such as piperazine, 2-methylpiperazine, ethylpiperazine and 2,5-dimethylpiperazine;

secondary amines with piperidine rings, such as 1,3-bis(4-piperidyl)methane, 1,3-bis(4-piperidyl)propane and 4,4'-bipiperidine;

amines with both a primary and a secondary amino group, such as 4-(aminomethyl)piperidine; and

ethylenediamine, propylenediamine, 1,2-propanediamine, 1,2-diamino-2-methylpropane, 2,2-dimethyl-1,3-propanediamine, tris(2-aminoethyl)amine, N,N'-dimethylethylenediamine and N,N'-dimethylpropanediamine, any of which may be used alone or in combined mixtures.

Mixtures of the aforementioned polyfunctional aliphatic amines with the aforementioned polyfunctional aromatic amines may also be used.

Examples of monomers with a plurality of reactive amino groups include polyethyleneimine, amine-modified polyepichlorhydrin and aminated polystyrenes.

Examples of the aforementioned prepolymers that are suitable for use include one or more prepolymers selected from among piperazine, 4-(aminomethyl)piperidine, ethylenediamine and 1,2-diamino-2-methylpropane.

Examples of polyfunctional halides include polyfunctional aromatic acid halides and polyfunctional aliphatic acid halides. They must be at least bifunctional so as to react with the polyfunctional amine to form a polymer.

A polyfunctional aromatic acid halide is an aromatic acid halide compound having two or more acid halide groups in the molecule. Specific examples include trimesoyl halides, trimellitoyl halides, isophthaloyl halides, terephthaloyl halides, pyromellitoyl halides, benzophenonetetracarboxylic acid halides, biphenyldicarboxylic acid halides, naphthalenedicarboxylic acid halides, pyridinedicarboxylic acid halides and benzenedisulfonoyl halides, any of which may be used alone or in combined mixtures. For this embodiment it is particularly preferred to use trimesoyl chloride alone, or a mixture of trimesoyl chloride and isophthaloyl chloride, or a mixture of trimesoyl chloride and terephthaloyl chloride.

A polyfunctional aliphatic acid halide is an aliphatic acid halide compound having two or more acid halide groups in the molecule. Specific examples include alicyclic polyfunctional acid halide compounds such as cyclobutanedicarboxylic acid halides, cyclopentanedicarboxylic acid halides, cyclopentanetricarboxylic acid halides, cyclopentanetetracarboxylic acid halides, cyclohexanedicarboxylic acid halides and cyclohexanetricarboxylic acid halides; as well as propanetricarboxylic acid halides, butanetricarboxylic acid halides, pentanetricarboxylic acid halides, succinoyl halides and glutaroyl halides. These may be used alone or as mixtures, and the polyfunctional aliphatic halides may also be used in admixture with the aforementioned polyfunctional aromatic acid halides.

Examples of polyfunctional isocyanates include ethylene diisocyanate, propylene diisocyanate, benzene diisocyanate, toluene diisocyanate, naphthalene diisocyanate and methylenebis(4-phenylisocyanate).

The first monomer and second monomer are each supplied for interfacial polymerization as a solution with an appropriate solvent.

As used herein,

the first solution is a solution containing the monomer that is to contact first with the microporous hollow fiber support membrane, and

the second solution is a solution containing the monomer that is to contact with the support membrane that has previously contacted with the first solution, reacting with the monomer in the first solution to form a macromolecular polymer.

Either the first monomer or the second monomer is present in the first solution, while the other is present in the second solution. Either monomer may be used in either solution, but preferably both monomers are not present in the same solution.

The solvent for the first solution and the solvent for the second solution are not particularly restricted so long as they dissolve their respective monomers and are not mutually miscible, forming a solution-solution interface where they mutually contact, and also do not damage the microporous hollow fiber support membrane.

Examples of such solvents include, as the solvent for the first solution, one or a mixture of two or more selected from among water and alcohols, and as the solvent for the second solution, one or a mixture of two or more selected from among hydrocarbon-based solvents such as n-hexane, cyclohexane, n-heptane, n-octane, n-nonane and n-decane.

Selection of such solvents will ensure that the first solution and second solution are immiscible and that interfacial polymerization will proceed as expected.

Preferably the first monomer is selected as the monomer in the first solution and the second monomer is selected as the monomer in the second solution.

The concentrations of the reactive compounds in the first solution and second solution are not particularly restricted as they will depend on the types of monomers and their distribution coefficients in the solvents. They may be appropriately set by a person skilled in the art.

For example, if an aqueous m-phenylenediamine solution is used as the first solution and an n-hexane solution of trimesoyl chloride is used as the second solution, the m-phenylenediamine concentration is preferably 0.1 to 10 mass% and more preferably 0.5 to 5 mass%. The concentration of the trimesoyl chloride is preferably 0.01 to 10 mass% and more preferably 0.1 to 5 mass%. If the solution concentrations are too low, formation of the thin-film by interfacial polymerization will be incomplete, resulting in defects and tending to lower the separation performance. If they are too high, on the other hand, the resulting thin-film will be too thick leading to reduced permeability and also potentially increasing the residual unreacted substances in the membrane and producing an adverse effect on membrane performance.

When acid is generated as the interfacial polymerization reaction progresses, an alkali may be added as an acid scavenger to either the first solution or second solution, or to both. There may also be added, as necessary, surfactants to improve wettability with the microporous hollow fiber support membrane, and catalysts to promote the reaction.

Examples of acid scavengers include:

caustic alkalis such as sodium hydroxide;
sodium phosphates such as trisodium phosphate;
sodium carbonates such as sodium carbonate; and
tertiary amines such as trimethylamine, triethylamine and triethylenediamine.

Examples of surfactants include sodium lauryl sulfonate and sodium lauryl benzenesulfonate.

Examples of catalysts include dimethylformamide.

These may also be added beforehand to either or both the first solution and second solution.

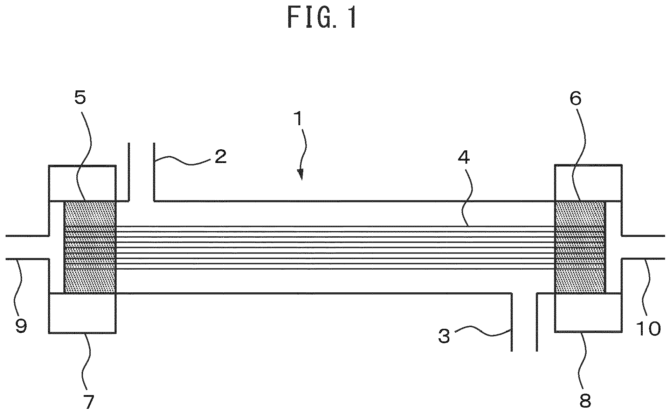

Fig. 1 shows an example of the configuration of the composite hollow fiber membrane module of the embodiment.

The composite hollow fiber membrane module 1 has a structure in which a fiber bundle composed of a plurality of hollow fibers 4 are packed into a tubular module housing with both ends of the fiber bundle of hollow fibers 4 anchored to the tube with adhesive-anchored sections 5, 6. The module housing has shell side conduits 2, 3 on the sides, which are sealed by headers 7, 8. The adhesive-anchored sections 5, 6 are each solidified so as to block the holes of the hollow fibers. The headers 7, 8 both have core side conduits 9, 10 which communicate with the insides of the hollow fibers 4 (hollow sections) but do not communicate with the outside. The conduits allow liquid to be introduced into the hollow fibers 4 or removed from them. The shell side conduits 2 and 3 communicate with the outside of the hollow fibers 4 but do not communicate with the inside.

Throughout the present specification, the inside of the hollow fibers will be referred to as the "core side" while the space between the outside of the hollow fibers and the tube will be referred to as the "shell side". The composite hollow fiber membrane module of the embodiment has a structure in which liquid flowing on the core side and liquid flowing on the shell side contact only through the hollow fiber membrane. Differential pressure is applied to the shell side conduits 2 and 3 and the core side conduits 9, 10, thus allowing a pressure difference to be created between the inside and outside of the hollow fibers.

Production of the composite hollow fiber membrane module of the embodiment is carried out, for example, by a method comprising the following steps in order:

a first solution liquid film-forming step in which a liquid film of a first solution comprising either a first monomer or a second monomer is formed on the inner surface of the microporous hollow fiber support membrane,
a pressure difference setting step in which a pressure difference is created on the inside and the outside of the microporous hollow fiber support membrane so that (inside pressure) > (outside pressure), and
a second solution contact step in which a second solution comprising the other of the first monomer or second monomer is contacted with the liquid film of the first solution.

In the first solution liquid film-forming step, a first solution containing either the first monomer or the second monomer is filled into the core side of the hollow fiber support membrane module.

A pressure difference is then created between the core side and shell side in a pressure difference setting step.

Next in the second solution contact step, the second solution that contains the other of the first monomer or second monomer and is immiscible with the first solution is passed through the core side of the hollow fiber support membrane module, thereby reacting the first monomer and second monomer on the inner surface of the microporous hollow fiber support membrane to form a separation active layer comprising a polymer thin film, to produce the desired composite hollow fiber module.

Any method may be used to create the pressure difference between the core side and shell side in the pressure difference setting step. The method may be selected from among the following, for example:

a method of pressure reduction on both the core side and shell side;
a method of pressure reduction on the shell side and atmospheric pressure on the core side;
a method of atmospheric pressure on the shell side and pressurization on the core side; and
a method of pressurization on both the core side and shell side.

For this embodiment, however, the pressure on the shell side is preferably set to be lower than the core side.

After the first solution has been filled into the core side, a pressure difference is created as described above (core side pressure > shell side pressure) to cause the excess first solution to infiltrate into the micropores of the support membrane, whereby a thin-film of the first solution is formed with a relatively uniform thickness on the inner surface of the support membrane, over the entire module.

For this embodiment, the thickness of the separation active layer composed of the polymer thin film formed on the inner surface of the microporous hollow fiber support membrane of the composite hollow fiber membrane module is closely related to the thickness of the liquid film of the first solution. The liquid film thickness can be adjusted by changing the pressure difference between the core side and shell side of the module, the time for which the pressure difference is maintained, and the amount of surfactant added to the first solution.

The thickness of the separation active layer is preferably 0.1 $\mu$m or larger and 5 $\mu$m or smaller and more preferably 0.2 $\mu$m or larger and 4 $\mu$m or smaller, as mentioned above. If the separation active layer exceeds 5 $\mu$m the durability will be improved but the permeability may be impaired. In order to form a separation active layer of suitable thickness it is preferred for the pressure difference between the core side and shell side to be 1 kPa or greater and 500 kPa or lower, more preferably 5 kPa or greater and 300 kPa or lower and even more preferably 10 kPa or greater and 100 kPa or lower. The time for which the pressure difference is maintained is preferably 0.1 minute to 100 minutes and more preferably 1 to 50 minutes. The amount of surfactant added to the first solution is preferably 0.01 mass% or greater and 1 mass% or lower and more preferably 0.05 mass% or greater and 0.5 mass% or lower, with respect to the total amount of the first solution.

A larger pressure difference between the core side and shell side and a longer time for maintaining the pressure difference will result in a smaller thickness of the liquid film of the first solution, or a larger thickness in the opposite case. If the thickness of the liquid film is too small, slight variations in the membrane thickness will create sections without liquid film formation, resulting in defects in the separation active layer. If the thickness of the liquid film is too large it may not be possible to obtain sufficient permeability.

In the method of producing the forward osmosis composite hollow fiber membrane module of this embodiment, the pressure difference formed between the core side and shell side is uniform from the outermost periphery across the center section of the hollow fibers in the module, and is also uniform from one of the ends across to the other end of the hollow fibers in the module. The thickness of the liquid film of the first solution formed at each location is therefore uniform, and the thickness of the separation active layer of the macromolecular polymer formed from it is also uniform. This results in low variation in the water permeation volume of liquid at different sections, allowing more stable high performance to be exhibited as a composite hollow fiber membrane module.

When this method is used to form a liquid film of the first solution on the inside of the hollow fibers through simple high pressure air without interfacial polymerization, variation for the mean thickness of the separation active layer at different sections is increased. A longer length of the module and a larger diameter of the module, tend to result in greater variation of the mean thickness of the separation active layer.

In the method for producing a composite hollow fiber membrane module of this embodiment, however, the thickness of the liquid film of the first solution is essentially uniform over all of the sections as a result of the pressure difference setting step. A larger module size will result in a more apparent effect by the invention. In practice, however, the length of the module is most conveniently 5 cm to 300 cm, and the diameter of the module is 0.5 to 20 inches. The effect of the invention is still exhibited, of course, even if the length and diameter of the module is less than or greater than these ranges.

The liquid film of the first solution having uniform thickness obtained by the pressure difference setting step therefore preferably contacts the second solution before the thickness uniformity is lost with elapse of time. From this standpoint, the time after the pressure difference setting step until the second solution contact step is preferably short, such as within 10 minutes.

According to the invention, the coefficient of variation is used to represent the variation for the mean thickness of the separation active layer at locations inside the hollow fiber module in the composite hollow fiber membrane module. The coefficient of variation is the value of the standard deviation for each measured location divided by the average, expressed as a percentage (%). Measurement is made at both ends and the center for 3 locations in the radial direction of the module, the outer peripheral, middle and center sections, for a total of 9 locations, with a number n of 1 or greater (with the same number n for each location).

The thickness of the measured location is represented as the mean thickness in a measurement range with a length of about 5 μm or larger and 100 μm or smaller. The length of the measurement range is preferably 5 μm or larger and 50 μm or smaller, more preferably 5 μm or larger and 20 μm or smaller and most preferably 13 μm. The separation active layer in the composite hollow fiber membrane module of the embodiment preferably has a fine irregular shape on the surface, as described below. For evaluation of the separation active layer thickness, therefore, it is suitable for the evaluation of each measurement location to be made based on the mean thickness in the measurement range.

When the average thicknesses measured at multiple measurement locations are compared, there is minimal variation in the separation active layer of the composite hollow fiber membrane module of the embodiment. The orientation of the length of the measurement range for evaluation of the mean thickness may be the lengthwise direction of the hollow fibers, the circumferential direction of the hollow fibers, or a direction diagonal to the lengthwise direction of the hollow fibers.

The orientations of the lengths of the measurement ranges in multiple scanning electron microscope images to be used to calculate the average may be the same or different orientations.

In the composite hollow fiber membrane module of the invention, the coefficient of variation for the mean thickness of the separation active layer from the outermost periphery of the hollow fibers across to the center section, and the coefficient of variation for the mean thickness of the separation active layer from one end of the hollow fibers in the module across to the other end, are preferably each 0% or greater and 60% or lower, more preferably 0% or greater and 50% or lower, even more preferably 0% or greater and 40% or lower, and most preferably 0% or greater and 30% or lower.

According to the invention, the support membrane used for the composite hollow fiber membrane may be a polyketone support membrane composed of a polyketone-containing polymer, and having a coefficient of variation for the mean thickness of the separation active layer that is in the range specified above, to notably improve the back pressure durability without impairing high water permeation volume.

The thickness of the separation active layer is calculated by a method of measuring the mass of the separation active layer section in a scanning electron microscope image taken of a cross section of the separation active layer in the thickness direction. Specifically, the mean thickness is calculated by printing the scanning electron microscope image of the hollow fiber cross section, cutting out the section corresponding to the separation active layer and measuring its mass, and calculating the area using a prepared calibration curve.

The composite hollow fiber membrane module of the embodiment has low variation in mean thickness of the separation active layer at different sections of the module. The module therefore also satisfactorily exhibits low variation in performance. The performance referred to here is water permeation volume and salt back diffusion.

The separation active layer in the composite hollow fiber membrane module of the embodiment has a plurality of fine irregularities on the surface. The extent of irregularities on the separation active layer surface can be estimated based on the ratio L2/L1 between the length L2 of the separation active layer surface and the length L1 of the interface between the separation active layer and the hollow fiber support membrane, in a scanning electron microscope image taken of a cross section of the separation active layer in the thickness direction. The ratio L2/L1 for the composite hollow fiber membrane module of the embodiment based on a cross-sectional image of the separation active layer is preferably 1.1 or greater and 5.0 or lower, more preferably 1.15 or greater and 4.0 or lower, and even more preferably 1.2 or greater and 3.0 or lower. The ratio L2/L1 can be evaluated using a scanning electron microscope image of a cross section of a hollow fiber membrane sample.

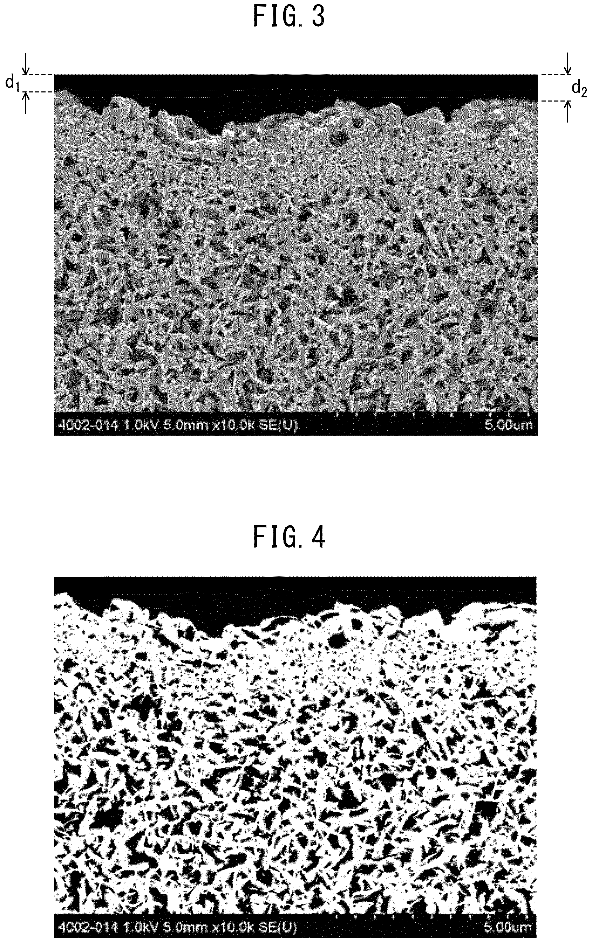

The method of evaluating the ratio L2/L1 will now be explained with reference to Fig. 3 to Fig. 7.

Fig. 3 is a scanning electron microscope image of a hollow fiber cross section of a composite hollow fiber membrane module obtained by interfacial polymerization using a common method.

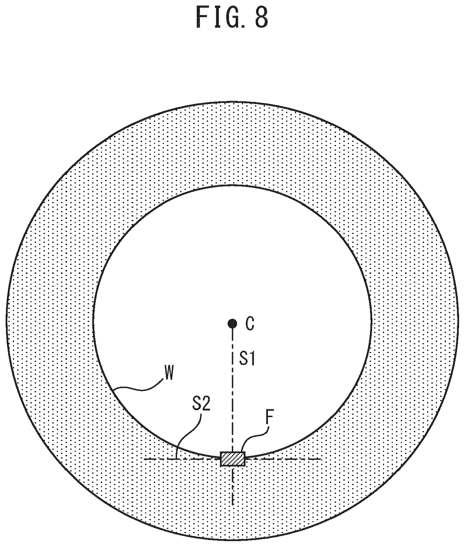

As shown in Fig. 8, the scanning microscope image was taken in a visual field (F), with the long sides of the rectangular visual field (F) (the horizontal direction sides) parallel to a straight line (S2) perpendicular to a straight line (S1) drawn from the center (C) to the inner wall (W) of the cross section, perpendicular to the axial direction of the hollow fiber membrane.

The ratio L2/L1 was calculated using a scanning electron microscope image taken in a magnification range of 5,000x or greater and 30,000x or lower, such as 10,000x. The magnification is selected so that the entire thickness direction of the separation active layer fits into a single image, and the ratio of the mean thickness of the separation active layer to the value of the interface length L1 is set to be 1.5 or greater and 100 or lower. In order to obtain accurate calculation of the ratio L2/L1 value, the imaging angle was adjusted so that a line representing the surface of the separation active layer was as nearly parallel as possible to the long side (lateral side) of the image field. Specifically, as shown in Fig. 3, the image is taken at an angle such that the difference between the distance $d_1$ from the top edge of the left side of the visual field to the separation active layer surface, and the distance $d_2$ from the top edge of the right side of the visual field to the separation active layer surface, is less than 0.5 μm.

The obtained image is then binarized. The image may be binarized by a method appropriately selected from among known methods such as discriminant analysis, p-tile methods and mode methods, depending on the photographed electron microscope image.

Fig. 4 is an example of a binarized result of the scanning electron microscope image of Fig. 3.

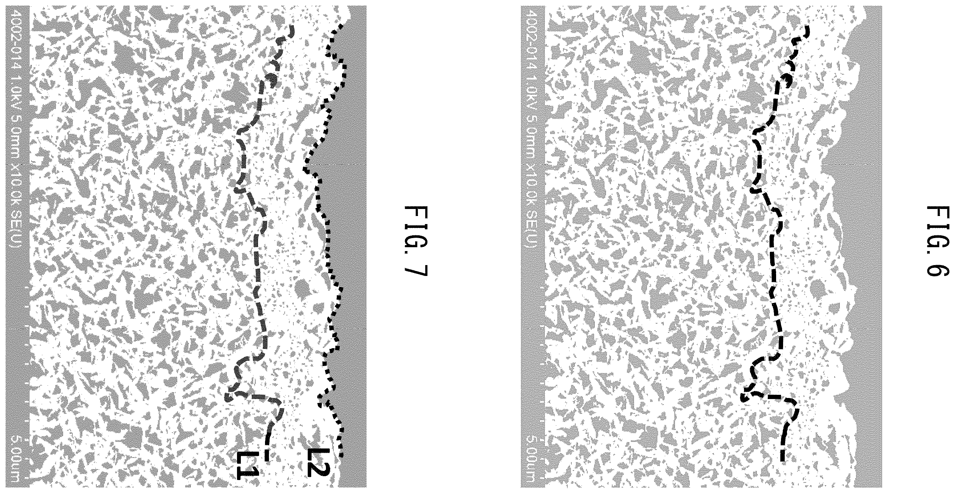

Fig. 6 shows the binarized image of Fig. 4 with broken-line highlighting of the section corresponding to the interface between the separation active layer and the hollow fiber support membrane. In Fig. 6, 0.5 $\mu$m sections at both the right and left of the image are not highlighted because the interface was difficult to identify at those sections by image processing. Identification of the interface between the separation active layer and the hollow fiber support membrane can be carried out by an appropriate image analysis method, such as the method described in the Examples below.

In Fig. 7, the separation active layer surface is also highlighted with a dotted line. The separation active layer surface region delineated with the dotted line also lacks 0.5 $\mu$m edge regions on the right and left, similar to the broken line-delineated region showing the interface between the separation active layer and the hollow fiber support membrane. In Fig. 7, the length of the broken line indicating the interface between the separation active layer and the hollow fiber support membrane is measured as L1 while the length of the dotted line indicating the separation active layer surface is measured as L2, and the ratio L2/L1 is calculated as an index of the irregularity of the separation active layer surface.

Scanning electron microscope images taken at three locations, the outer peripheral, middle and center sections in the radial direction of the module, at both ends and the center of the module, for a total of 9 samples, were used to calculate the respective averages and determine the ratio L2/L1.

In the scanning electron microscope images used to evaluate the ratio L2/L1, the direction of a line from the left edge to the right edge may be in the circumferential direction of the hollow fiber, or in a direction diagonal to the lengthwise direction of the hollow fiber. The orientations of lines from the left edges to the right edges in multiple scanning electron microscope images to be used to calculate the average may be respectively the same or different orientations.

The present inventors have surmised that the following mechanism is the mechanism by which the surface of the separation active layer in the composite hollow fiber membrane module of the embodiment forms such a fine irregular structure. However, the present invention is not to be constrained by the theory explained below.

The separation active layer in the composite hollow fiber membrane module of the embodiment is preferably formed by interfacial polymerization. In interfacial polymerization, it is thought that the liquid film of the first monomer solution formed on the hollow fiber surface forms a polymerization layer as polymerization at the interface proceeds without miscibility when it contacts with the second monomer solution. As a result, the separation active layer that is formed is thought to have a form with numerous micro irregularities on the surface. When the separation active layer is formed by a method other than interfacial polymerization it is not possible to form a separation active layer with numerous surface micro irregularities.

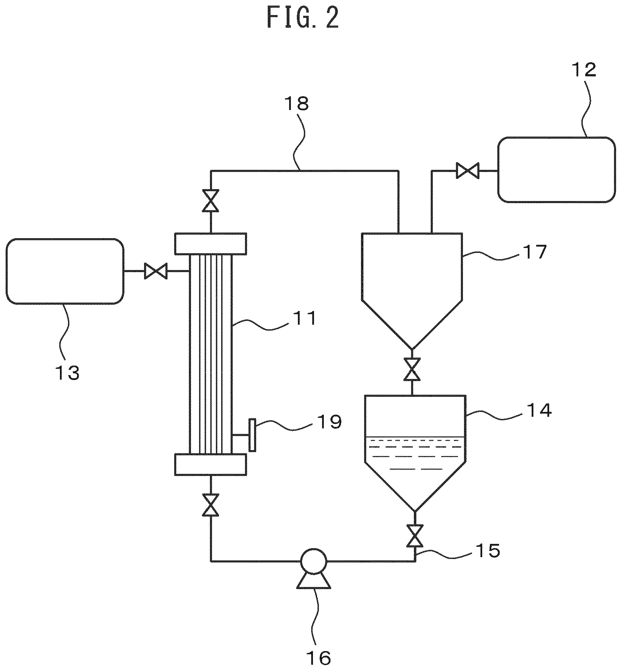

A method for producing the composite hollow fiber membrane module of the embodiment will now be described with reference to Fig. 2.

In the apparatus shown in Fig. 2, on the core side of a hollow fiber support membrane module 11 having the first solution filled into the inside (core side) of the microporous hollow fiber support membrane, tubing from a second solution storage tank 14 is connected to the inlet, with a second solution liquid feed pump 16 that pumps the second solution being connected in the line. At the outlet on the core side, a second solution drainage tube 18 is connected in a manner communicating with a second solution drain tank 17. A core side pressure adjustment device 12 that controls the pressure on the inside of the hollow fibers of the hollow fiber support membrane module 11 is connected to the second solution drain tank 17. An end cap 19 is fitted onto the lower conduit on the shell side of the hollow fiber support membrane module 11, while a shell side pressure adjustment device 13 that controls the shell pressure is connected into the upper conduit.

Production of the composite hollow fiber membrane module of the embodiment may be carried out by the following procedure, for example:

First, the first solution liquid film-forming step is carried out and each of the tubes is connected into the hollow fiber support membrane module 11 filled with the first solution on the core side (the inside of the microporous hollow fiber support membrane). Next, the pressure difference setting step is carried out, in which a pressure difference is created between the core side and shell side (core side pressure > shell side pressure) by the core side pressure adjustment device 12 and shell side pressure adjustment device 13. During the step, the excess first solution in the hollow fibers on the core side enter the micropores due to the pressure difference (often even seeping out to the shell side), forming a liquid film of uniform thickness on the inside of the hollow fibers. The second solution contact step is then carried out, in which the second solution in the second solution storage tank 14 is conveyed inside the hollow fibers using a pump and contacted with the liquid film of the first solution. The contact results in interfacial polymerization between the two monomers, forming a separation active layer composed of a polymer thin film on the inside of the microporous hollow fiber support membrane. During the second solution contact step it is possible for the pressure on the core side to fluctuate, but the function of the core side pressure adjustment device 12 can reduce such pressure fluctuation.

When interfacial polymerization is carried out, therefore, it is preferred to maintain the previously set pressure difference for the core side and shell side.

The interfacial polymerization is preferably carried out only once from the viewpoint of high water permeation volume.

Interfacial polymerization between the first monomer and second monomer in this manner forms a polymer thin film on the inside of the microporous hollow fiber support membrane, producing a composite hollow fiber module of this embodiment.

The composite hollow fiber module of the invention has a uniform macromolecular polymer layer across the entire module, since the liquid film thickness of the first monomer solution used to form the macromolecular polymer by interfacial polymerization is uniform throughout the outer periphery and center section of the module, as well as the top and bottom of the module. The interfacial polymerization proceeds at the interface between the first monomer solution and second monomer solution, thus forming numerous microirregularities on the surface of the macromolecular polymer layer that is formed.

<Composite membrane and composite membrane module>

For this embodiment, the membrane area is the value defined by formula (3), obtained from the lengths, inner diameters and number of hollow fibers in the module, without the bonded sections. Here, "a" represents the membrane area ($m^2$), "b" represents the length (m) of the hollow fibers without the bonded sections, "c" represents the inner diameter (m) of the hollow fibers, and "n" represents the number of hollow fibers.

$$a = c \times \pi \times b \times n \ (3)$$

The membrane area of the module is preferably 100 $cm^2$ or greater and more preferably 150 $cm^2$ or greater, from the viewpoint of practical use.

The permeation volume of the composite hollow fiber membrane module of the embodiment is preferably as large as possible. In order to ensure that the permeation volume is at least on a level obtained with a module having a space occupied volume equivalent to that of a currently available membrane, the permeation volume should be 0.1 kg/($m^2 \times$ hr) or greater. However, in order to avoid rapid concentration and deposition of the liquid mixture to be treated, the permeation volume is also preferably 200 kg/($m^2 \times$ hr) or lower.

The permeation volume of the composite hollow fiber membrane module, as referred to herein, is defined according to the following formula (4), as the amount of substance moving from the liquid mixture into the induction liquid by osmotic pressure when the liquid mixture to be treated and the induction liquid (which is at higher osmotic pressure) are mutually opposed across the membrane.

$$F = Lp/(M \times H) \ (4)$$

In this formula, F is the permeation volume (kg/($m^2 \times$ hr)), Lp is the amount of permeated substance (kg), M is the inner surface area of the membrane ($m^2$) and H is time (hr).

Examples of components to be included in a liquid mixture that is treatable by the composite hollow fiber membrane module of the embodiment include:

water;
carboxylic acids such as acetic acid, acrylic acid, propionic acid, formic acid, lactic acid, oxalic acid, tartaric acid and benzoic acid;
nitriles such as acetonitrile, propionitrile and butyronitrile;
organic acids such as sulfonic acid, sulfinic acid, barbituric acid, uric acid, phenols, enols, diketone-type compounds, thiophenols, imides, oximes, aromatic sulfonamides, primary nitro compounds and secondary nitro compounds;
lower alcohols such as methanol, ethanol, 1-propanol and 2-propanol;
higher alcohols of 6 or more carbon atoms;
glycols such as ethylene glycol and propylene glycol;
aliphatic hydrocarbons such as pentane, hexane, decane, undecane and cyclooctane;
aromatic hydrocarbons such as benzene, toluene and xylene;
ketones such as acetone and methylisobutyl ketone;
aldehydes such as acetaldehyde;
ethers such as dioxane and tetrahydrofuran;
amides such as dimethylformamide and N-methylpyrrolidone;
nitrogen-containing organic compounds such as pyridine; and

esters such as acetic acid esters and acrylic acid esters; as well as:

organic solvents commonly used for industrial purposes and experimental analysis, such as dimethyl sulfoxide; sugars, fertilizers, enzymes and mineral oils,
polyols such as polyethylene glycol and polyvinyl alcohol;
polyamines;
polysulfonic acids;
polycarboxylic acids such as polyacrylic acid;
polycarboxylic acid esters such as polyacrylic acid esters;
modified polymer compounds modified by graft polymerization; and
copolymerized polymer compounds obtained by copolymerization of non-polar monomers such as olefins with polar monomers that have polar groups such as carboxyl groups.

The rejectivity of the composite hollow fiber membrane module of the embodiment is preferably as high as possible. A low rejectivity is associated with a greater amount of leakage loss of the target solute on the induction liquid side after concentration by forward osmosis. From this viewpoint, the rejectivity of the composite hollow fiber membrane module of the embodiment is preferably 90% or greater, more preferably 95% or greater and even more preferably 99% or greater.

The rejectivity of a composite hollow fiber membrane module, for the purpose of the invention, is defined according to the following formula (5), as the degree to which the passage of larger solute molecules is delayed when a substance migrates from a liquid mixture into an induction liquid through a membrane.

$$R_i = (1 - C_{pi}/C_{fi}) \ (5)$$

Here, $R_i$ is the rejectivity (%) of chemical species "i", $C_{pi}$ is the concentration (wt%) of chemical species "i" in the permeate, and $C_{fi}$ is the concentration (wt%) of chemical species "i" in the liquid mixture.

The repeat pressure resistance of the composite hollow fiber membrane module of the embodiment is preferably as high as possible. A low repeat pressure resistance may lead to destruction of the membrane during the course of concentrating the organic solvent-containing liquid mixture by forward osmosis. From this viewpoint, the repeat pressure resistance at a pressure of 40 kPaG is preferably 100 times or greater and more preferably 1,000 times or greater.

The repeat pressure resistance of the composite hollow fiber membrane module, for the purpose of the invention, is the number of repeats until destruction of the membrane, when a predetermined pressure is repeatedly applied from the support membrane side while contacting with the organic solvent or organic solvent-containing liquid mixture.

EXAMPLES

The invention will now be explained in detail through the following examples, with the understanding that these examples are not limitative on the invention.

<Measuring methods>

The measuring methods for the values used in the Examples were as follows.

[1] Inner diameter and outer diameter of hollow fibers, and membrane thickness

A cross section perpendicular to the lengthwise direction of the hollow fiber membrane was photographed at 5 arbitrary locations in the lengthwise direction using a digital microscope (model: VHX-5000 by Keyence Corp.), and the inner diameter and outer diameter were measured at two arbitrary points of each cross-sectional image. The mean inner diameter r ($\mu$m) and mean outer diameter R ($\mu$m), obtained as the number-average values of the total of 10 measurements, were recorded as the inner diameter and outer diameter of the hollow fiber membrane. Using the mean inner diameter r and mean outer diameter R of the hollow fiber membrane, the mean thickness $L_h$ ($\mu$m) of the hollow fiber membrane obtained according to the mathematical expression: $L_h = (R-r)/2$ was recorded as the thickness of the hollow fiber membrane.

[2] The porosity of the membrane section in the hollow fiber membrane was calculated using the following formula (1).

$$\text{Porosity} (\%) = (1 - G/\rho/V) \times 100 \quad (1)$$

G in the formula is the mass (g) of the hollow fiber membrane, and it was measured using 10 bundled hollow fiber membranes with lengths of 70 cm. The variable $\rho$ is the density (g/cm$^3$) of the polymer composing the hollow fiber membrane, and the value used was 1.30 g/cm$^3$ for a polyketone hollow fiber membrane and 1.37 g/cm$^3$ for a polyether sulfone hollow fiber membrane. The variable V is the volume (cm$^3$) of the membrane section of the hollow fiber membrane, and it was calculated from the outer diameter of the hollow fiber membrane measured by the method of [1] above, the mean thickness of the membrane section of the hollow fiber membrane measured by the method of [1] above, and the length (70 cm) and number (10) of the hollow fibers.

[3] Maximum pore size of support membrane

The maximum pore size of the support membrane was measured according to JIS K3832 (bubble point method), using a Palm Porometer (model CFP-1200AEX) by PMI Co. and GALWICK (surface tension = 15.6 dynes/cm) by PMI Co. as the wetting liquid.

[4] Scanning electron microscope observation of separation active layer and measurement of mean thickness

Each of the composite hollow fiber membrane modules obtained in the Examples and Comparative Examples was analyzed, taking one hollow fiber as a sample from each of 3 locations: the center, a location at 50% of the radius and the outermost periphery, in the radial direction of the module. Each hollow fiber was divided into 3 parts in the lengthwise direction to obtain 9 samples.

Each of the hollow fiber samples was freeze-dried using purified water and roughly cut in the direction perpendicular to the hollow fiber lengthwise direction using a razor. An ion milling device (E-3500 by Hitachi High-Technologies Corp.) was then used with adjustment to a setting for irradiation of an ion beam from the outer surface side of the hollow fiber through to the inner surface side of the hollow fiber, to create a cross section sample of the hollow fiber inner surface. The ion milling conditions were an acceleration voltage of 3 kV, a beam current of about 20 mA and a machining time of 15 hours.

Each cross section sample was observed with a scanning electron microscope (SEM).

For pretreatment, the cross section sample was fixed onto an SEM sample stage for cross section observation using carbon paste and dried, after which an osmium coater (HPC-30W by Shinkuu Device Co., Ltd.) was used for 2 seconds of coating with osmium (thickness: about 1.5 nm) for conduction treatment of the sample.

A scanning electron microscope (S-4800 by Hitachi High-Technologies Corp.) was then used for observation under conditions with an acceleration voltage of 1.0 kV, a working distance of 5 mm $\pm$0.7 mm, an emission current setting of 10$\pm$1 $\mu$A and using the upper detector (SE: secondary electron). The observation field used was the hollow fiber inner surface and its vicinity, including the separation active layer and base, and a region such that the difference between the distance $d_1$ from the top edge of the left side of the visual field to the separation active layer surface, and the distance $d_2$ from the top edge of the right side of the visual field to the separation active layer surface, was less than 0.5 $\mu$m.

A representative SEM image is shown in Fig. 3. The SEM image was taken at a magnification of 10,000x, with an image (sample) length corresponding to approximately a 13 $\mu$m width.

The interface between the separation active layer and the hollow fiber support membrane in the image was identified as follows.

The image was opened using the open source software "ImageJ" from the U.S. National Institutes of Health, and was resized to a long side (full horizontal image width) of 600 pixels. The "Brightness/Contrast" function of the software was then set to "Auto" to adjust the contrast. Binarization was performed by setting the "Make Binary" function to "Auto". Fig. 4 shows an example of a binarized image obtained from the image of Fig. 3 in the manner described above.

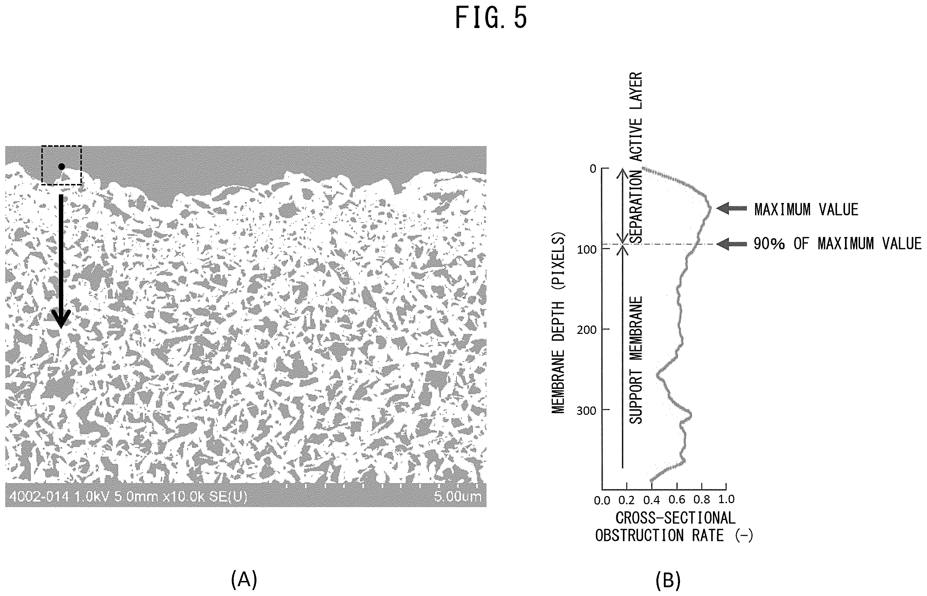

For an arbitrary point of the binarized image, the proportion of the white area in a 1 $\mu$m $\times$ 1 $\mu$m rectangle centered on the point (white area/total area of rectangle) was defined as the "cross-sectional obstruction rate" for the point. The broken line rectangle surrounding the black dot in Fig. 5(A) is the rectangle used to calculate the cross-sectional obstruction rate for the black dot.

In the SEM image of Fig. 5(A), the location of the black dot was used to calculate the cross-sectional obstruction rate for the black dot location, for movement from the surface of the separation active layer toward the base direction (the depthwise direction of the separation active layer). An example of a graph plotting the cross-sectional obstruction rate from the separation active layer surface in the depthwise direction is shown in Fig. 5(B).

In the plot of Fig. 5(B), the location where the cross-sectional obstruction rate initially falls below 90% of the maximum toward the base side from the maximum location is defined as the interface between the separation active layer and the hollow fiber support membrane.

An example of the interface between the separation active layer and support membrane in the binarized image of Fig. 4 is indicated by the broken line in Fig. 6.

An image similar to Fig. 6 was printed onto paper using a printer, and the 0.5 $\mu$m regions at both edges of the image where the cross-sectional obstruction rate could not be defined were cut off.

The separation active layer section in the printed image was then cut off and the mass was measured using a fine balance. The mass was converted to thickness ($\mu$m) of the separation active layer using a previously prepared calibration curve. The average for the nine samples was recorded as the mean thickness of the separation active layer, and the standard deviation and coefficient of variation were calculated.

[5] Measurement of ratio L2/L1

In the binarized image obtained in [4] above, the length of the interface between the separation active layer and the hollow fiber support membrane determined as described above (the broken line in Fig. 7) was measured as L1. The length of the surface of the separation active layer (the membrane surface on the side not in contact with the hollow fiber support membrane, indicated by the dotted line in Fig. 7) was also measured as L2. These values were used to measure and calculate the ratio L2/L1.

The lengths L1 and L2 were measured in the following manner.

Transparent double-sided tape was applied onto the measuring section of the scanning electron microscope image. Wires were attached edge-to-edge on the image along the lines on the interface and surface to be measured for length (for example, the broken line and dotted line in Fig. 7), and the excess wire portions were cut off. Each wire was then removed and the length was measured. The wires used were highly flexible 0.1 mm$\varphi$ resin or metal wires, with negligible stretchability during use.

Measurement was conducted using the images for all 9 of the samples, and the average values were used as the measured values for the ratio L2/L1.

[6] Membrane area of hollow fiber bundle

For this embodiment, the membrane area is value defined by formula (3), obtained from the lengths, inner diameters and number of hollow fibers in the module, without the bonded sections. Here, "a" represents the membrane area (m$^2$), "b" represents the length (m) of the hollow fibers without the bonded sections, "c" represents the inner diameter (m) of the hollow fibers, and "n" represents the number of hollow fibers.

$$a = c \times \pi \times b \times n \ (3)$$

[7] Measurement of permeation volume and rejectivity from organic solvent-containing mixture

A 1 L tank containing 0.4 kg of treatment liquid was connected to core side conduits (reference numerals 9 and 10 for the composite hollow fiber membrane module 1 of Fig. 1) of the composite hollow fiber membrane modules obtained in the Examples and Comparative Examples via tubes, and the treatment liquid was circulated with a pump. Separately, a 0.5 L tank containing 0.1 kg of induction liquid was connected to shell side conduits (reference numerals 2 and 3 for the composite hollow fiber membrane module 1 of Fig. 1) via tubes, and the induction liquid was circulated with a pump. The core side tank and shell side tank were each set on a balance. Both were simultaneously operated with a linear speed of 1 cm/sec on the core side and a linear speed of 2.5 cm/sec on the shell side, and the permeation volume was measured from the change in weight measured using the balance.

In order to identify the rejectivity of the composite membrane, Brilliant Blue R (Wako Pure Chemical Industries, Ltd.) was included in the feed solution as a rejectivity evaluation solute. The marker substance concentration in the feed solution before and after operation and the concentration of Brilliant Blue R in the induction liquid after operation were measured using an ultraviolet-visible spectrophotometer (model: UV-2400PC) by Shimadzu Corp., and the rejectivity was determined using formula (6).

$$R = 100 \times (1 - Cp/Cf) \ (6)$$

In the formula, R is the rejectivity (%) for the solute, and Cf is the average value of the solute concentration (wt%) in the feed solution before and after operation.

Cp is the solute concentration (wt%) in the solution permeating the composite hollow fiber membrane, and it can be calculated by the following formula (7).

$$Cp = Cd \times (Ld + Lp)/Lp \ (7)$$

In the formula, Lp is the amount (kg) of solution that has permeated the composite hollow fiber membrane, Ld is the amount (kg) of induction liquid introduced into the tank before operation, and Cd is the solute concentration (wt%) of the induction liquid after operation.

[8] Repeat pressure test

A 1 L tank containing 0.4 kg of test solvent was connected to shell side conduits (reference numerals 2 and 3 for the composite hollow fiber membrane module 1 of Fig. 1) of the composite hollow fiber membrane modules obtained in the Examples and Comparative Examples via tubes, and the supplied solvent was circulated with a pump. The core side conduits were left open (reference numerals 9 and 10 for the composite hollow fiber membrane module 1 of Fig. 1). Repeated cycles were carried out while in this state, with each cycle being a pressure of 40 kPaG applied to the shell side of the membrane for 1 second by operation of the pump, and open pressure for 1 second. The number of cycles until destruction was recorded as the repeat pressure resistance, where "destruction of the membrane" was defined as the point where the amount of leakage of the test solvent from the core side conduit during the test period was confirmed to be 0.05 $g/cm^2$ or greater per 1 $cm^2$ membrane area in one cycle. When destruction of the membrane was not confirmed even after 1,000 total cycles, the test was stopped at that point and the repeat pressure resistance was recorded as "> 1000 times" in Table 2.

Even if the membrane does not suffer destruction, the test solvent can permeate through the membrane by the pressure difference on both sides of the composite hollow fiber membrane as the driving force. However, since the amounts of leakage in Examples 1 to 12 were all 0.01 $g/cm^2$ or lower, failing to reach 0.05 $g/cm^2$, it was judged that no destruction of the membranes had occurred. The amount of leakage was also 0.01 $g/cm^2$ or lower, failing to reach 0.05 $g/cm^2$, up to the 678th cycle in Example 13 and up to the 10th cycle in Comparative Example 1, and therefore it was judged that no destruction of the membrane had occurred.

<Example 1>

(1) Fabrication of forward osmosis composite hollow fiber membrane module

Polyketone with a limiting viscosity of 2.2 dl/g, obtained by complete alternating copolymerization of ethylene and carbon monoxide, was added to a 65 mass% resorcin aqueous solution to a polymer concentration of 15 mass%, and the mixture was stirred and dissolved at 80°C for 2 hours and defoamed to obtain a uniform transparent dope.

The dope was filled into a wet hollow fiber spinning machine equipped with a dual spinneret, and a hollow fiber membrane was formed by phase separation, by extruding 25 wt% methanol from the inside of the dual spinneret and the doping solution from the outside into a coagulation tank filled with a 40 wt% methanol solution.

The obtained hollow fiber membrane was cut to a length of 70 cm, bundled and washed. The washed hollow fiber membrane bundle was subjected to solvent exchange with acetone and then further solvent exchange with hexane, after which it was dried at 50°C.

The outer diameter of the polyketone hollow fiber membrane obtained in this manner was 0.8 mm, the inner diameter was 0.5 mm, the porosity was 78%, and the maximum pore size of the membrane walls was 130 nm.

After placing a fiber bundle consisting of 100 polyketone hollow fiber membranes into a cylindrical plastic module housing (tubular case) with a diameter of 2 cm and a length of 10 cm, both ends of the fiber bundle were anchored with an adhesive to fabricate a polyketone hollow fiber support membrane module having a membrane area of 100 $cm^2$.

The obtained polyketone hollow fiber support membrane module was used for interfacial polymerization on the inner surface of each hollow fiber membrane, as described below.

After placing 20.216 g of m-phenylenediamine and 1.52 g of sodium lauryl sulfate into a 1 L container, 991 g of purified water was added and dissolved, preparing a first solution to be used for interfacial polymerization. Next, 0.6 g of trimesoyl chloride was placed in a separate 1 L container, and 300 g of n-hexane was added and dissolved to prepare a second solution to be used for interfacial polymerization.

The first solution was filled into the core side of the hollow fiber support membrane module (the inside of the hollow fibers) and allowed to stand for 5 minutes, after which nitrogen gas was flowed into the core side to remove the liquid. The hollow fiber support membrane module was then installed in the apparatus shown in Fig. 2, with the inside of the hollow fibers being wetted with the first solution.

The core side pressure was set to ordinary pressure with the core side pressure adjustment device 12, and the shell side pressure was set to reduced pressure of 10 kPa as absolute pressure with the shell side pressure adjustment device 13, for a pressure difference so that: core side pressure > shell side pressure. After keeping this condition for 2 minutes, the pressure was maintained while conveying the second solution to the core side at a flow rate of 40 cc/min for 3 minutes using the second solution liquid feed pump 16, for interfacial polymerization. The polymerization temperature was set to 25°C.

After removing the hollow fiber support membrane module 11 from the apparatus, it was allowed to stand for 5 minutes in a thermostatic bath set to 50°C, and the n-hexane was removed by gasification. Both the shell side and core side were washed with purified water to complete a forward osmosis composite hollow fiber membrane module.

(2) Evaluation

(2-1) Evaluation of initial performance

The forward osmosis composite hollow fiber membrane module was used for concentration of a processing liquid, and the permeation volume and rejectivity were measured. The processing liquid (liquid mixture) and induction liquid used were the following.

[Processing liquid]

Solute: Brilliant Blue R
Solvent: Methanol
Solute concentration: 50 ppmw

[Induction liquid]

Induction substance: PEG2000 (Tokyo Kasei Kogyo Co., Ltd.)
Solvent: Methanol (same as processing liquid solvent)
Induction substance concentration: 356.8 g/L

As the evaluation results, the permeation volume was 0.92 kg/(m$^2$ × hr) and the rejectivity was 99.9%.

(2-1) Repeat pressure test

After measurement of the permeation volume and rejectivity, methanol (same solvent as the processing liquid and induction liquid) was used as the test solvent for a repeat pressure test. As a result, the repeat pressure resistance was ≥1,000 times.

(2-3) Measurement of separation active layer

The module was then disassembled, hollow fibers were sampled at the aforementioned 9 locations, and the mean thickness of the separation active layer and coefficient of variation were measured. The results are shown in Table 2. The ratio L2/L1 for the separation active layer was measured by the method described above. The results are shown in Table 3.

<Examples 2 to 12>

A forward osmosis composite hollow fiber membrane module was fabricated in the same manner as Example 1.
Initial performance evaluation (permeation volume and rejectivity), repeat pressure testing and separation active layer measurement (mean thickness and coefficient of variation) were carried out in the same manner as Example 1, except for using the obtained forward osmosis composite hollow fiber membrane module and the solvents of the processing liquid and induction liquid, and using the solvents listed in Table 2 as the test solvent for the repeat pressure test. The results are shown in Table 2.

(Example 13)

A forward osmosis composite hollow fiber membrane module was fabricated and evaluated in the same manner as Example 1, except that the standing time after filling and drainage of the first solution during the interfacial polymerization of "Fabrication of forward osmosis composite hollow fiber membrane module", before conveying the second solution and after setting the pressure difference to core side pressure > shell side pressure was 10 seconds. The results are shown in Table 2.

<Comparative Example 1>

(1) Fabrication of forward osmosis composite hollow fiber membrane module

A polyketone hollow fiber support membrane module was fabricated in the same manner as Example 1.
A forward osmosis composite hollow fiber membrane module was fabricated by interfacial polymerization on the inner surface of the hollow fiber membrane in the same manner as Example 1, except that the obtained polyketone hollow fiber support membrane module was used, and the pressure after filling the first solution into the core side of the hollow fiber support membrane module, allowing it to stand and draining, and the pressure after introduction of the second solution (interfacial polymerization), were both set for ordinary pressure on the core side and shell side, to obtain "core side pressure = shell side pressure".

(2) Evaluation

Initial performance evaluation (permeation volume and rejectivity), repeat pressure testing and separation active layer measurement (mean thickness and coefficient of variation) were carried out in the same manner as Example 1, except for using the obtained forward osmosis composite hollow fiber membrane module. The results are shown in Table 2.
<Comparative Example 2>

(1) Fabrication of forward osmosis composite hollow fiber membrane module

Polyether sulfone (trade name: Ultrason by BASF Corp.) was dissolved in N-methyl-2-pyrrolidone to obtain a 20 wt% homogeneous transparent dope.
The dope was filled into a wet hollow fiber spinning machine equipped with a dual spinneret, and a hollow fiber membrane was formed by phase separation, extruding water from the inside of the dual spinneret and the doping solution from the outside into a coagulation tank filled with water.
The obtained hollow fiber membrane was cut to a length of 70 cm, bundled and washed. The washed hollow fiber membrane bundle was subjected to solvent exchange with acetone and then solvent exchange with hexane, after which it was dried at 50°C.
The outer diameter of the polyether sulfone hollow fiber membrane obtained in this manner was 1.0 mm, the inner diameter was 0.7 mm, and the maximum pore size of the membrane walls was 50 nm.
After placing a fiber bundle consisting of 130 polyether sulfone hollow fiber membranes into a cylindrical plastic module housing (tubular case) with a diameter of 2 cm and a length of 10 cm, both ends of the fiber bundle were anchored with an adhesive to fabricate a polyether sulfone hollow fiber support membrane module having a membrane area of 200 cm$^2$, with the construction shown in Fig. 1.
A forward osmosis composite hollow fiber membrane module was fabricated by interfacial polymerization in the same manner as Example 1, except for using the obtained polyether sulfone hollow fiber support membrane module.

(2) Evaluation

Initial performance evaluation (permeation volume and rejectivity), repeat pressure testing and separation active layer measurement (mean thickness and coefficient of variation) were carried out in the same manner as Example 1, except for using the obtained forward osmosis composite hollow fiber membrane module. The results are shown in Table 2.

(Comparative Example 3)

Interfacial polymerization was carried out in the same manner as Example 1, except for using a polyether sulfone hollow fiber support membrane module obtained in the same manner as Comparative Example 2. The interfacial polymerized module was then removed from the apparatus shown in Fig. 2, and the same interfacial polymerization was repeated for a total of two interfacial polymerizations, to fabricate a forward osmosis composite hollow fiber membrane module. Evaluation was carried out in the same manner as Example 1 except for using the obtained forward osmosis composite hollow fiber membrane module. The results are shown in Table 2.

[Table 1]

Table 1

| | Hollow fiber support membrane | | | | | Membrane area of hollow fiber bundle (cm$^2$) | Pressure setting during interfacial polymerization |
|---|---|---|---|---|---|---|---|
| | Material | Outer diameter (mm) | Inner diameter (mm) | Porosity (%) | Maximum pore size (nm) | | |
| Example 1 | Polyketone | 0.8 | 0.5 | 78 | 130 | 100 | Core side > shell side |
| Example 2 | Polyketone | 0.8 | 0.5 | 78 | 130 | 100 | Core side > shell side |
| Example 3 | Polyketone | 0.8 | 0.5 | 78 | 130 | 100 | Core side > shell side |
| Example 4 | Polyketone | 0.8 | 0.5 | 78 | 130 | 100 | Core side > shell side |
| Example 5 | Polyketone | 0.8 | 0.5 | 78 | 130 | 100 | Core side > shell side |
| Example 6 | Polyketone | 0.8 | 0.5 | 78 | 130 | 100 | Core side > shell side |
| Example 7 | Polyketone | 0.8 | 0.5 | 78 | 130 | 100 | Core side > shell side |
| Example 8 | Polyketone | 0.8 | 0.5 | 78 | 130 | 100 | Core side > shell side |
| Example 9 | Polyketone | 0.8 | 0.5 | 78 | 130 | 100 | Core side > shell side |
| Example 10 | Polyketone | 0.8 | 0.5 | 78 | 130 | 100 | Core side > shell side |
| Example 11 | Polyketone | 0.8 | 0.5 | 78 | 130 | 100 | Core side > shell side |
| Example 12 | Polyketone | 0.8 | 0.5 | 78 | 130 | 100 | Core side > shell side |
| Example 13 | Polyketone | 0.8 | 0.5 | 78 | 130 | 100 | Core side > shell side |
| Comp. Example 1 | Polyketone | 0.8 | 0.5 | 78 | 130 | 100 | Core side = shell side |
| Comp. Example 2 | Polyether sulfone | 1.0 | 0.7 | 81 | 50 | 200 | Core side > shell side |
| Comp. Example 3 | Polyether sulfone | 1.0 | 0.7 | 81 | 50 | 200 | Core side > shell side |

[Table 2]

Table 2

| | Hollow fiber support membrane | Separation active layer | | Evaluation results | | | |
|---|---|---|---|---|---|---|---|
| | | Thickness | | Initial performance | | | Repeat pressure resistance |
| | Material | Average (μm) | Coefficient of variation (%) | Solvent | Permeation volume (kg/(m2·h)) | Rejectivity (%) | |
| Example 1 | Polyketone | 2.50 | 23.4 | Methanol | 0.92 | 99.9 | >1,000 times |
| Example 2 | Polyketone | 2.49 | 26.7 | Isopropanol | 0.80 | 99.7 | >1,000 times |
| Example 3 | Polyketone | 2.10 | 28.4 | Acetonitrile | 0.40 | 99.9 | >1,000 times |
| Example 4 | Polyketone | 2.32 | 29.5 | Dimethylformamide | 0.30 | 99.8 | >1,000 times |
| Example 5 | Polyketone | 2.50 | 23.3 | Dimethyl sulfoxide | 0.34 | 99.2 | >1,000 times |
| Example 6 | Polyketone | 2.53 | 27.4 | Acetone | 0.60 | 99.5 | >1,000 times |
| Example 7 | Polyketone | 2.43 | 23.4 | Tetrahydrofuran | 0.70 | 99.6 | >1,000 times |
| Example 8 | Polyketone | 2.35 | 25.0 | Dichloromethane | 0.45 | 99.7 | >1,000 times |
| Example 9 | Polyketone | 2.49 | 25.0 | 50 wt% methanol aq | 2.45 | 99.9 | >1,000 times |
| Example 10 | Polyketone | 2.86 | 18.9 | 50 wt% isopropanol aq | 2.41 | 99.9 | >1,000 times |
| Example 11 | Polyketone | 2.60 | 26.7 | 50 wt% acetonitrile aq | 2.89 | 99.9 | >1,000 times |
| Example 12 | Polyketone | 2.55 | 25.6 | 50 wt% Dimethylformamide aq | 2.35 | 99.8 | >1,000 times |
| Example 13 | Polyketone | 2.21 | 41.9 | Methanol | 0.81 | 99.8 | 679 times |

EP 4 173 699 A1

22

(continued)

| | Hollow fiber support membrane | Separation active layer | | Evaluation results | | | |
|---|---|---|---|---|---|---|---|
| | | Thickness | | Initial performance | | | Repeat pressure resistance |
| | Material | Average ($\mu$m) | Coefficient of variation (%) | Solvent | Permeation volume (kg/($m^2 \cdot h$)) | Rejectivity (%) | |
| Comp. Example 1 | Polyketone | 2.21 | 77.2 | Methanol | 0.67 | 99.8 | 11 times |
| Comp. Example 2 | Polyether sulfone | 0.88 | 42.3 | Methanol | 0.89 | 99.0 | 1 time |
| Comp. Example 3 | Polyether sulfone | 2.12 | 22.5 | Methanol | 0.45 | 99.0 | 1 time |

The following conclusions may be drawn from Table 1 and Table 2.

The composite hollow fiber membrane modules of the embodiment, which had pressure difference between the core side and shell side such that core side > shell side when interfacial polymerization was carried out on the inner surface of the hollow fiber membrane housed in the hollow fiber support membrane module, had a lower coefficient of variation in mean thickness of the separation active layer, more excellent water permeation volume and more satisfactory repeat pressure resistance, compared to the module of Comparative Example 1 which was fabricated without such a pressure difference during interfacial polymerization. The composite hollow fiber membrane modules of the embodiment using support membranes made of polyketone as the hollow fiber support membrane also had more satisfactory repeat pressure resistance compared to the module of Comparative Example 2 which used polyether sulfone, for example.

<Reference Example 1>

After dissolving 100 parts by mass of an aromatic polysulfone (trade name: UDEL$^R$ polysulfone P-1700 by Union Carbide) and 100 parts by mass of Polyvinylpyrrolidone K90 (Wako Pure Chemical Industries, Ltd.) in 500 parts by mass of dimethylformamide (Wako Pure Chemical Industries, Ltd.), the mixture was adequately defoamed to obtain a polymer solution. A 3 ml portion of the obtained polymer solution was then dropped onto a 10 cm × 10 cm, 3 mm-thick glass plate and cast out with a doctor blade having a 50 mm width and a gap 100 μm gap, after which the solvent was removed by contact with 80°C warm air for 2 hours, to obtain a non-porous flat membrane base with a membrane thickness of 30 μm, comprising a homogeneous mixture of 100 parts by mass of the aromatic polysulfone and 100 parts by mass of Polyvinylpyrrolidone K90.

Separately, ordinary temperature-curing silicone rubber (SILPOT 184W/C, trade name of Dow Corning, Inc.) and a 1/10 mass amount of a curing catalyst were dissolved in n-pentane to prepare a 1 mass% silicone solution.

The silicone solution was supplied onto the surface of the non-porous flat membrane base for about 3 minutes at a supply rate of about 30 ml/min, and permeated with air for about 1 minute at a linear speed of 30 m/sec. After then carrying out crosslinking treatment by heating at 100°C × 1 hr, the membrane was immersed in 60°C ethanol for 16 hours for extraction removal of the polyvinylpyrrolidone, to obtain a composite separation membrane having a silicone rubber thin-film formed on the surface of a porous flat membrane base made of an aromatic polysulfone. The silicone rubber thin-film of the composite separation membrane had very little thickness variation and essentially no permeation into the base material surface pores.

The ratio L2/L1 of the obtained composite separation membrane was 1.01, as determined by the method according to [5] above.

The results are shown in Table 3 with the ratio L2/L1 results for Example 1.

[Table 3]

Table 3

|  |  | L2/L1 (average) |
|---|---|---|
| Example 1 | Fiber bundle outer periphery top | 1.35 |
|  | Fiber bundle outer periphery bottom | 1.26 |
|  | Fiber bundle center top | 1.43 |
|  | Fiber bundle center bottom | 1.27 |
| Reference Example 1 |  | 1.01 |

As clearly seen in Table 3, a separation active layer with numerous fine surface irregularities was obtained in Example 1 wherein the separation active layer was formed by interfacial polymerization, whereas the separation active layer obtained in Reference Example 1 wherein the separation active layer was formed by polymer solution coating had few fine surface irregularities.

INDUSTRIAL APPLICABILITY

The composite hollow fiber membrane module of the invention can be suitably used in a forward osmosis technique for an organic solvent-containing liquid mixture, such as for concentration of pharmaceuticals or foods, or volume reduction of waste water.

REFERENCE SIGNS LIST

1 Composite hollow fiber membrane module
2, 3 Shell side conduit
4 Hollow fibers
5, 6 Adhesive-anchored section
7, 8 Header
9, 10 Core side conduit
11 Hollow fiber support membrane module
12 Core side pressure adjustment device
13 Shell side pressure adjustment device
14 Second solution storage tank
15 Second solution conveying tube
16 Second solution feed pump
17 Second solution drain tank
18 Second solution drainage tube
19 End cap

**Claims**

1. A forward osmosis composite hollow fiber membrane module having a hollow fiber bundle composed of a plurality of hollow fibers, wherein:

   the hollow fibers are hollow fibers having a separation active layer made of a polymer thin film formed on the inner surface of a microporous hollow fiber support membrane comprising a polyketone-containing polymer thin-film, and have a hollow fiber bundle membrane area of 100 cm$^2$ or greater, and
   the coefficient of variation for the mean thickness of the separation active layer is 0% or greater and 60% or lower in the radial direction and lengthwise direction of the hollow fiber bundle, as calculated by measuring the mass of the separation active layer section in a scanning electron microscope image taken of a cross section of the separation active layer in the thickness direction.

2. The module according to claim 1, wherein the ratio L2/L1 between the length L2 of the separation active layer surface and the length L1 of the interface between the separation active layer and the hollow fiber support membrane is 1.1 or greater and 5.0 or lower, in a scanning electron microscope image taken of a cross section of the separation active layer in the thickness direction.

3. The module according to claim 2, wherein the ratio L2/L1 is 1.2 or greater and 3.0 or lower.

4. The module according to any one of claims 1 to 3, wherein the coefficient of variation is 0% or greater and 50% or lower.

5. The module according to claim 4, wherein the coefficient of variation is 0% or greater and 30% or lower.

6. The module according to any one of claims 1 to 5, wherein the macromolecular polymer is the polycondensation product of:

   a first monomer comprising at least one selected from the group consisting of polyfunctional amines, and
   a second monomer comprising at least one selected from the group consisting of polyfunctional acid halides and polyfunctional isocyanates.

7. The module according to claim 6, wherein the macromolecular polymer is at least one selected from among polyamides and polyureas.

8. A method for producing a module according to claim 6, which comprises:

   a first solution liquid film-forming step in which a liquid film of a first solution comprising either a first monomer or a second monomer is formed on the inner surface of the microporous hollow fiber support membrane,
   a pressure difference setting step in which a pressure difference is created on the inside and the outside of the microporous hollow fiber support membrane so that (inside pressure) > (outside pressure), and
   a second solution contact step in which a second solution comprising the other of the first monomer or second monomer is contacted with the liquid film of the first solution.

9. The method according to claim 8, wherein the time after the pressure difference setting step is carried out until the second solution contact step is carried out is within 10 minutes.

10. The method according to claim 8 or 9, wherein the pressure difference is created by pressure reduction on the outside of the hollow fiber support membrane.

11. The method according to claim 8 or 9, wherein the pressure difference is created by pressurization on the inside of the hollow fiber support membrane.

12. The method according to claim 8 or 9, wherein the pressure difference is created by pressurization to different pressures on the outside and inside of the hollow fiber support membrane.

13. The method according to any one of claims 8 to 12, wherein the pressure difference is 1 to 100 kPa.

FIG. 1

FIG. 2

# FIG. 3

4002-014 1.0kV 5.0mm x10.0k SE(U)    5.00um

# FIG. 4

4002-014 1.0kV 5.0mm x10.0k SE(U)    5.00um

FIG. 5

## FIG. 6

4002-014 1.0kV 5.0mm x10.0k SE(U)    5.00um

## FIG. 7

L2

L1

4002-014 1.0kV 5.0mm x10.0k SE(U)    5.00um

FIG. 8

## INTERNATIONAL SEARCH REPORT

| International application No. |
|---|
| PCT/JP2021/024610 |

A. CLASSIFICATION OF SUBJECT MATTER
B01D 63/02(2006.01)i; B01D 69/12(2006.01)i; B01D 71/54(2006.01)i; B01D 71/56(2006.01)i; B01D 71/72(2006.01)i
FI: B01D63/02; B01D69/12; B01D71/54; B01D71/56; B01D71/72
According to International Patent Classification (IPC) or to both national classification and IPC

B. FIELDS SEARCHED

Minimum documentation searched (classification system followed by classification symbols)
B01D61/00-71/82, C02F1/44

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2016/024573 A1 (ASAHI KASEI FIBERS CORP.) 18 February 2016 (2016-02-18) claims, paragraphs [0020]-[0045], [0094]-[0112] | 1-13 |
| Y | WO 2016/027869 A1 (ASAHI KASEI CORPORATION) 25 February 2016 (2016-02-25) claims, paragraphs [0017]-[0077] | 1-13 |
| A | JP 2015-511175 A (LG CHEM, LTD.) 16 April 2015 (2015-04-16) | 1-13 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 August 2021 (24.08.2021) | 07 September 2021 (07.09.2021) |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

<table>
<tr><td colspan="2"><b>INTERNATIONAL SEARCH REPORT</b><br>Information on patent family members</td><td>International application no.<br>PCT/JP2021/024610</td></tr>
</table>

| Patent Documents referred in the Report | Publication Date | Patent Family | Publication Date |
|---|---|---|---|
| WO 2016/024573 A1 | 18 Feb. 2016 | US 2017/0225131 A1<br>claims, paragraphs<br>[0055]-[0110],<br>[0225]-[0264]<br>AU 2015302650 A1<br>CA 2956666 A1<br>CN 106659987 A<br>EP 3181215 A1<br>KR 10-2017-0021879 A<br>SG 11201700679S A<br>TW 201615263 A | |
| WO 2016/027869 A1 | 25 Feb. 2016 | US 2017/0266625 A1<br>claims, paragraphs<br>[0058]-[0194]<br>AU 2015304316 A1<br>CA 2958054 A1<br>CN 106659978 A<br>EP 3184163 A1<br>EP 3586947 A1 | |
| JP 2015-511175 A | 16 Apr. 2015 | CN 104039430 A<br>KR 10-2014-0065360 A<br>EP 2886187 A1<br>US 2014/0353242 A1<br>WO 2014/081230 A1 | |

Form PCT/ISA/210 (patent family annex) (January 2015)

**REFERENCES CITED IN THE DESCRIPTION**

**Patent documents cited in the description**

- JP 2017213559 A
- WO 2016024573 A
- JP 2017144390 A
- WO 2016027869 A
- JP 2002348401 A
- JP HEINO24431 A

**Non-patent literature cited in the description**

- *Nat. Mater.,* 2017, vol. 16, 276-279
- *NATURE COMMUNICATIONS,* 2018, 91426